(19) Europäisches Patentamt / European Patent Office / Office européen des brevets

(11) **EP 1 979 381 B1**

(12) **EUROPEAN PATENT SPECIFICATION**

(45) Date of publication and mention
of the grant of the patent:
**18.01.2012 Bulletin 2012/03**

(21) Application number: **07712113.5**

(22) Date of filing: **25.01.2007**

(51) Int Cl.:
**C08F 6/10** (2006.01)   **C08G 63/90** (2006.01)
**A61L 27/14** (2006.01)   **C08G 63/08** (2006.01)

(86) International application number:
**PCT/EP2007/050731**

(87) International publication number:
**WO 2007/088135 (09.08.2007 Gazette 2007/32)**

(54) **METHOD FOR THE PURIFICATION OF RESORBABLE POLYMERS FROM RESIDUAL MONOMERS**

VERFAHREN ZUR BEFREIUNG RESORBIERBARER POLYMERE VON RESTMONOMEREN

PROCEDE DE PURIFICATION DE POLYMERES RESORBABLES PAR ELIMINATION DE MONOMERES RESIDUELS

(84) Designated Contracting States:
**AT BE BG CH CY CZ DE DK EE ES FI FR GB GR HU IE IS IT LI LT LU LV MC NL PL PT RO SE SI SK TR**

(30) Priority: **31.01.2006 EP 06101101**

(43) Date of publication of application:
**15.10.2008 Bulletin 2008/42**

(73) Proprietor: **PURAC Biochem BV
4206 AC Gorinchem (NL)**

(72) Inventors:
• **KRUL, Raymon, Reinier
NL-2624 MD Delft (NL)**

• **VAN ALST, Michiel
6851 DZ Huissen (NL)**
• **UITSLAG, Tom, John
NL-4205 LN Gorinchem (NL)**

(74) Representative: **Beetz, Tom et al
De Vries & Metman
Overschiestraat 180
1062 XK Amsterdam (NL)**

(56) References cited:
**US-A- 4 810 775        US-A- 5 610 266
US-A1- 2003 177 868**

• **PATENT ABSTRACTS OF JAPAN vol. 010, no. 123 (C-344), 8 May 1986 (1986-05-08) & JP 60 248727 A (KURARAY KK), 9 December 1985 (1985-12-09)**

**EP 1 979 381 B1**

**Description**

This invention relates to a method for the purification of a resorbable polymer from residual monomers.

US patent 4,810,775 discloses a purification process for resorbable polymers wherein the polymer is dissolved in a solvent and the polymer solution is added to a precipitation agent in a mechanical dispersion unit. The polymer precipitates and is separated from the slurry comprising said precipitation agent and precipitated polymer. For instance, the process results in purified polymer poly(D,L-lactide) with a residual monomer content of 0.5 wt% D,L-lactide, and for D,L-lactide, glycolide copolymer the residual monomer content is still between 0.13 and 0.3 wt%.

The process as disclosed in above-mentioned patent results in polymers with a relatively high residual monomer content. Especially when said polymers are to be used for medical and pharmaceutical applications in humans or animals the above-mentioned residual monomer contents are unacceptably high. When used for medical and pharmaceutical applications, the polymers should contain a low as possible residual monomer content, more preferably no detectable amounts at all, since such impurity may cause undesirable and potentially dangerous side-effects. The polymers used for these applications often involve resorbable polymers as for example resorbable polyesters. Resorbable polymers are used for example in controlled drug release and/or different types of implants as e.g. sutures and bone fixation devices to be used in the human or animal body.

Polymers or polyesters based on lactic acid or lactide and/or glycolic acid or glycolide are in particular used for above-mentioned applications since said polymers degrade in the human or animal body under the influence of body fluids and thus leave no trace. This prevents for example the need for a second surgery for removal of said bone fixation devices from the body after having accomplished their purpose.

A residual lactide or glycolide monomer content for example in resorbable polymers will hydrolyse relatively fast and acids will be formed. These acids can negatively affect the efficiency of a medicament and/or the acids lead to irritation of the skin or other parts of the human or animal body. Further, residual monomers can have a detrimental effect on the active ingredients used for medicines, in particular protein based medicines, and/or for controlled drug release in pharmaceutical applications. Furthermore, residual monomers can have a strong negative impact on the thermal stability and/or mechanical strength of polymers and even can accelerate the breakdown or degradation of the polymers when the polymers are used as implants in the human or animal body. Lactide- and glycolide-based polymers are preferably used for medical implants such as bone fixation devices that require a high mechanical strength and for 'non-bearing' medical implants not in need of this mechanical strength because of their degradability in the human and animal body. Said polymers cannot be used for this type of application when they contain significant amounts of residual glycolide, glycolic acid, lactide or lactide acid monomer.

The present invention provides a method for purifying resorbable polymers wherein the polymer contains at least one of the moieties derived from glycolide, caprolactone, L-lactide, D-lactide, D,L-lactide, meso-lactide monomer, 1,4-dioxanone, and trimethylenecarbonate from residual monomers, preferably to a residual monomer content of below detection limit by GC (gas chromatography). Such strongly reduced residual monomer content makes the obtained polymers very suitable for medical and other applications since it will be devoid of the above-mentioned side effects. It was found that the kinematical viscosity of the polymer played a crucial role in the efficiency of separating polymer and residual monomers. It was further found that optimum results were obtained when the polymer concentration is at or close at the so-called critical concentration ($C_{crit}$).

To this end the invention relates to a method for the purification of a resorbable polymer from residual monomers by precipitating the polymer, comprising the addition of a solution of said polymer in a solvent and the addition of a precipitation agent into a mixing chamber, characterized in that the concentration of the polymer in the solution is log $C_{crit} \pm 0.3$ logarithmic units, wherein $C_{crit}$ is the critical concentration.

The concept of critical concentration $C_{crit}$ is very basic in polymer chemistry and belongs to the basic knowledge of the polymer chemist. The principles can, for instance, be found in the standard student's edition of G. Challa; "Polymeerchemie"; Het Spectrum, Utrecht, Antwerpen (Prisma Technica 52); 1973 (Pages 96-99). The $C_{crit}$ is the concentration wherein the distribution of the chain segments becomes uniform through the solution. At this concentration the individual chains are not longer distinguishable. At higher concentrations than $C_{crit}$ polymer solutions contain entangled polymer chains that cannot behave individually and therefore already behave as polymers. This $C_{crit}$ can be determined by plotting the logarithm of the kinematical viscosity (log 2 $\nu$ . against the logarithm of the polymer concentration (log c). The kinematical viscosity can be determined in a manner common to the skilled man, such as with an Ubbelohde viscosimeter. Because the kinematical viscosity above $C_{crit}$ more or less increases exponentially with concentration this plot provides practically two straight lines that cross each other at a crossing point. The crossing point is the log $C_{crit}$ value, which gives the $C_{crit}$ as the concentration in wt.%.

The polymer concentration according to the invention is around $C_{crit}$. According to the invention it was found that a polymer concentration within 0.3 logarithmic units of the $C_{crit}$ is optimal to separate residual monomers from the polymer on precipitation. More preferably the polymer concentration is 0.2 logarithmic units, most preferably within 0.1 logarithmic units of the $C_{crit}$.

The polymers suited for the purification method according to the invention are resorbable polymers, which are amorphous or highly crystalline (having a crystallinity higher than 70%) or are of crystallinity in between. Crystalline resorbable polymers can be purified with a variety of different purification methods. The purification method according to the invention is particularly suited for purification of amorphous and partly crystalline resorbable polymers of a crystallinity between zero and 70% and more preferably between zero and 20% because the method is then found to be a more efficient, simpler, and cheaper than the other known methods for purification for said types of resorbable polymers. Further, especially above-mentioned types of polymers are used in medical applications and therefore require a very high degree of purification with respect to the residual monomer content, which is achievable with the purification method according to the invention.

Polyesters and more particular polyesters based on lactic acid or lactide and/or glycolic acid or glycolide, are preferably used for medical applications such as controlled drug release, non-bearing implants and bearing implants such as bone fixation devices for application in the human or animal body. Said polymers include homopolymers of glycolide and of lactide and further copolymers or terpolymers based on lactide and/or glycolide and/or caprolactone. The lactide includes L-, D-, meso or D,L-lactide or mixtures hereof. Other homo- and co/ter-polymers based on hydroxycarboxylic acids are also suited for the purification method according to the invention. Preferred are polymers of or based on methylglycolide, dimethylglycolide, polymethylglycolide, diethylglycolide, dibutylglycolide, caprolactone, valerolactone, decalactone, propiolactone, butyrolactone and pivalolactone as well as polymers based on trioxanone (1,3 and 1,4), dioxanone (1,3 and 1,4), substituted dioxanone, trimethylenecarbonate, ethylenecarbonate and propylenecarbonate. Said polymers are also often applied in (medical) applications wherein a very low, preferably no residual monomer content is required.

Other suitable (co)monomers include compounds as tetramethyl glycolide, xylitol, sorbitol, lactitol, adonitol, pentaerythritol, fructose and/or epichlorohydrin, isopropyl morpholine, isopropylmethylmorpholinedione, beta propiolic acid, alpha-hydroxy(iso)butyric acid, alpha-hydroxy(iso)valeric acid, alpha-hydroxy(iso)caproic acid, alpha-hydroxy-alpha-ethylbutyric acid, alpha-hydroxy-alpha-methylvaleric acid, alpha-hydroxyheptanoic acid, alpha-hydroxyoctanoic acid, alpha-hydroxy(tetra)decanoic acid and/or alpha-hydroxystearic acid.

According to the purification method of the invention, the polymer is dissolved in a solvent and precipitated with a precipitation agent. The polymer solution is added to a mixing chamber of a mechanical dispersion unit. Said precipitation agent is a liquid and/or a mixture of liquids in which the polymer does not or 'barely' dissolves and in which the solvent does dissolve. As the polymer solution comes in contact with the precipitation agent in said mixing chamber, the solvent and precipitation agent dissolve in each other resulting in a new solvent or liquid phase in which the polymer is precipitated out because of the strongly reduced solubility of the polymer in the liquid phase. Impurities in the polymer as e.g. residual monomers dissolve or remain in the liquid phase and are thus separated from the precipitating polymer. The result is a slurry of said liquid phase and of a solid phase comprising the precipitated and purified polymer.

The polymer can be dissolved in various types of solvents including, for example, acetone, 1,4-dioxan, dimethylacetamide, tetrahydrofuran, toluene, methylformamide, dimethylsulfoxide or chlorinated hydrocarbons as chloroform and methylene chloride. Acetone is preferred as solvent since it is an environmentally benign (e.g. good degradability in waste water treatments) and cheap solvent and less toxic compared to for example chlorinated hydrocarbon based solvents.

Suitable precipitation agents are water, methanol, ethanol, freons, hydrocarbons and hydrocarbon mixtures as e.g. petroleum ether and organic solvents in which the polymer has a very low solubility. The most preferred precipitation agent is water since it is cheap, environmentally friendly, easy to handle, non-toxic, etc. It further combines very well with acetone when used as the solvent since both dissolve very well in each other while the polymer is efficiently precipitated out due to the low solvability of the final acetone-water system.

If water is used as precipitation agent small amounts of organic or inorganic compounds, surface tension influencing agents, or complexing agents may be added in order to establish an increasing effect on the efficiency of the purification process by e.g. facilitating the precipitation process or separation of the liquid and solid phase.

The following examples illustrate the invention.

Materials

A copolymer of 53 mole% of D,L-lactide and 47 mole% of glycolide was used in the experiments. The crude polymer contained 1.16 wt.% residual monomer.

The polymer was dissolved in acetone for further experiments (acetone-polymer mixtures A-D) (see Table I)

Table I

| Mixture | Concentration in wt.% |
|---------|----------------------|
| A | 3.9 |
| B | 6.0 |
| C | 8.0 |
| D | 10.5 |

Precipitation

In the precipitation step water was used as precipitation agent and acetone as solvent. The acetone-polymer solutions A-D were fed to an IKA Ultra Turrax UTL 25 homogenizer, fitted with an S 25 KV-25-G-IL dispersing element. Water is the main process stream, and flows through the mixing chamber. In the mixing chamber the rotor-stator system causes a shear field. The polymer solution is added to the water in the vicinity of the shear field. The expression "vicinity" means at or close at the parts of the mixer that cause the shear forces, i.e. at a site where the shear force is at least 25% of the maximum shear force of the mixer. The amount of water added to the amount of polymer-acetone solution can be changed to obtain the best results (flow ratio). The precipitate slurry was sent to a centrifuge, to collect the polymer precipitate in a filter bag. A water stream containing the impurities was flown out of the centrifuge and discarded. The filter cake was washed with water in a slowly rotating centrifuge, after which the rotation speed was maximized to remove the bulk quantity of the liquids. The remaining cake was milled and the material dried in a vacuum oven at 25-30°C and the residual monomer content was determined by GC.

Viscosity measurements

The kinematical viscosities $\eta$ of the various polymer-acetone mixtures having different wt.% polymer were measured with an Ubbelohde viscometer (Schott Geräte type II) at 25°C according to standard procedures. The logarithmic value of $\eta$ was plotted against the logarithmic value of the concentration (in wt.%) giving two straight lines with a crossing point $C_{crit}$.
Inherent viscosity of the polymer per se was similarly measured in chloroform at 25 °C (Schott Geräte type OC).

GC measurements

Materials and equipment:

A Varian Star 3600 VX gas chromatograph, equipped with a fused silica column and a flame ionization detector, was used for the residual monomer analysis. The polymer samples were dissolved in chloroform with 1-octanol as internal standard (1 g of 1-octanol in 100 mL of solvent). The residual monomer content was calculated from the peak area of the monomer.

Gc conditions:

| | |
|---|---|
| Injector temperature: | 180 °C |
| Detector temperature: | 300 °C |
| Initial column temperature: | 150 °C |
| Holding time: | 2 min |
| Final column temperature: | 200 °C |
| Holding time: | 3 min |
| Rate: | 10 °C/min |
| Carrier gas flow: | 1.5 mL/min |
| Pressure: | 0.552 bar |
| Split: | 60 |

From the results of the standard solution, the response factor R of monomer compared to 1-octanol can be determined using the following formula:

$$R = (Amount\ M/Area\ M)/(Amount\ IS/Area\ IS)$$

where:

Amount M = amount of added monomer (mole)

Area M = area of the monomer peak

Amount IS = amount of added internal standard (1-octanol) (mole)

Area IS = area of the internal standard peak

Since the peak area is related to the number of moles of a substance, the amount of monomer can be calculated using the following formula:

$$Amount\ of\ monomer\ (\%\ w/w) =$$
$$(Amount\ IS/Area\ IS).R.Area.M.fwM.100/Amount\ of\ sample\ (mg)$$

where

Amount IS = amount of added internal standard (mmole)
Area IS = area of the internal standard peak
R = response factor
Area M = area of the monomer peak
fwM = molecular weight of the monomer (g/mole)

Results

| Solution | Flow ratio polymer/water (vol/vol) | Log $C_{crit}$ | Log C | Residual monomer content (wt%) | Within claim 1-3 |
|---|---|---|---|---|---|
| A | 1:8.6 | -1.40 | -1.41 | Bdl* | 3 |
| A | 1:14.2 | -1.40 | -1.41 | Bdl | 3 |
| A | 1:15.1 | -1.40 | -1.41 | Bdl | 3 |
| A | 1:26.8 | -1.40 | -1.41 | Bdl | 3 |
| B | 1:34.6 | -1.90 | -1.22 | Bdl | 2 |
| B | 1:10.6 | -1.40 | -1.22 | Bdl | 2 |
| B | 1:16.1 | -1.40 | -1.22 | Bdl | 2 |
| B | 1:15.7 | -1.40 | -1.22 | Bdl | 2 |
| B | 1:26.3 | -1.40 | -1.22 | Bdl | 2 |
| B | 1:47.8 | -1.40 | -1.22 | Bdl | 2 |
| C | 1:15.3 | -1.90 | -1.10 | Bdl | 1 |
| C | 1:16.4 | -1.40 | -1.10 | 0.01 | 1 |
| C | 1:23.9 | -1.40 | -1.10 | 0.01 | 1 |

(continued)

| Solution | Flow ratio polymer/water (vol/vol) | Log $C_{crit}$ | Log C | Residual monomer content (wt%) | Within claim 1-3 |
|---|---|---|---|---|---|
| C | 1:47.8 | -1.40 | -1.10 | 0.07 | 1 |
| C | 1:65.2 | -1.40 | -1.10 | Bdl | 1 |
| D | 1:26 | -1.40 | -0.98 | 0.03 | comparative |
| D | 1:46 | -1.40 | -0.98 | 0.08 | comparative |
| D | 1:97 | -1.90 | -0.98 | 0.08 | Comparative |
| *Bdl = below detection limit by GC | | | | | |

## Claims

1. A method for the purification of a resorbable polymer, wherein the polymer contains at least one of the moieties derived from glycolide, caprolactone, L-lactide, D-lactide, D,L-lactide, meso-lactide monomer, 1,4-dioxanone, and trimethylenecarbonate, from residual monomers comprising the addition of a solution of said polymer in a solvent, and the addition of a precipitation agent into a mixing chamber to precipitate the polymer, **characterized in that** the concentration of the polymer in the solution is log $C_{crit} \pm 0.3$ logarithmic units, wherein $C_{crit}$ is the critical concentration.

2. The method according to claim 1 wherein the concentration of the polymer in the solution is log $C_{crit} \pm 0.2$ logarithmic units.

3. The method according to claim 1 wherein the concentration of the polymer in the solution is log $C_{crit} \pm 0.1$ logarithmic units.

4. The method according to any one of claims 1-3 wherein the polymer is purified to contain a quantity of residual monomers that is below detection limit by gas chromatography.

5. The method according to any one of claims 1-4 wherein the solvent is acetone and the precipitation agent is water.

6. The method according to claim 5 wherein the inherent viscosity of the polymer is 0.1 to 6 dl/g in chloroform at 25 °C.

7. The method according to any one of claims 1-6 wherein the precipitation agent is water, which is added at a site where the shear force is at least 25% of the maximum shear force of the mixer leading to a stream of aqueous polymer slurry.

## Patentansprüche

1. Verfahren zur Aufreinigung eines resorbierbaren Polymers, wobei das Polymer mindestens einen der Teile enthält, die abgeleitet sind aus Glykolid, aus Caprolakton, L-Lactid, D-Lactid, D,L-Lactid, Meso-Lactid-Monomer, 1,4-Dioxanon und Trimethylencarbonat, aus Restmonomeren mit dem Zusatz einer Lösung des genannten Polymers in einem Lösungsmittel, und dem Zusatz eines Fällungsmittels in einer Mischkammer zum Ausfällen des Polymers, **dadurch gekennzeichnet, dass** die Konzentration des Polymers in der Lösung log $C_{crit} \pm 0,3$ logarithmische Einheiten beträgt, wobei $C_{crit}$ die kritische Konzentration ist.

2. Verfahren nach Anspruch 1, wobei die Konzentration des Polymers in der Lösung log $C_{crit} \pm 0,2$ logarithmische Einheiten beträgt.

3. Verfahren nach Anspruch 1, wobei die Konzentration des Polymers in der Lösung log $C_{crit} \pm 0,1$ logarithmische Einheiten beträgt.

4. Verfahren nach einem der Ansprüche 1 bis 3, wobei das Polymer aufgereinigt wird und eine Menge von Restmonomeren enthält, die unterhalb der Nachweisgrenze durch Gaschromatographie liegt.

**5.** Verfahren nach einem der Ansprüche 1 bis 4, wobei das Lösungsmittel Aceton und das Fällungsmittel Wasser ist.

**6.** Verfahren nach Anspruch 5, wobei die inhärente Viskosität des Polymer 0,1 bis 6 dl/g in Chloroform bei 25 °C beträgt.

**7.** Verfahren nach einem der vorhergehenden Ansprüche 1 bis 6, wobei das Fällungsmittel Wasser ist, das an einer Stelle hinzugefügt wird, wo die Scherkraft mindestens 25% der maximalen Scherkraft des Mischers beträgt, der zu einem Strom wasserhaltigen Polymerschlammes führt.

**Revendications**

**1.** Procédé de purification d'un polymère résorbable, où le polymère contient au moins l'une des fractions dérivées du glycolide, caprolactone, L-lactide, D-lactide, D,L-lactide, d'un monomère méso-lactide, de la 1,4-dioxanone et du carbonate de triméthylène, à partir de monomères résiduels comprenant l'ajout d'une solution dudit polymère dans un solvant, et l'ajout d'un agent de précipitation dans une chambre de mélange pour précipiter le polymère, **caractérisé en ce que** la concentration du polymère dans la solution est égale à log $C_{crit} \pm 0{,}3$ unités logarithmiques, où $C_{crit}$ est la concentration critique.

**2.** Procédé selon la revendication 1, dans lequel la concentration du polymère dans la solution est égale à log $C_{crit} \pm 0{,}2$ unités logarithmiques.

**3.** Procédé selon la revendication 1, dans lequel la concentration du polymère dans la solution est égale à log $C_{crit} \pm 0{,}1$ unités logarithmiques.

**4.** Procédé selon l'une quelconque des revendications 1-3 dans lequel le polymère est purifié de sorte à contenir une quantité de monomères résiduels inférieure à la limite de détection par chromatographie en phase gazeuse.

**5.** Procédé selon l'une quelconque des revendications 1-4 dans lequel le solvant est l'acétone et l'agent de précipitation est l'eau.

**6.** Procédé selon la revendication 5 dans lequel la viscosité inhérente du polymère est comprise entre 0,1 et 6 dl/g dans le chloroforme à 25 ° C.

**7.** Procédé selon l'une quelconque des revendications 1-6 dans lequel l'agent de précipitation est l'eau, qui est ajouté à un site où la force de cisaillement est au moins égale à 25% de la force de cisaillement maximale du mélangeur aboutissant à un flux d'une suspension aqueuse de polymère.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4810775 A

**Non-patent literature cited in the description**

- Polymeerchemie. **G. CHALLA.** Het Spectrum, Utrecht, Antwerpen (Prisma Technica 52. 1973, vol. 52, 96-99